# EUROPÄISCHE PATENTSCHRIFT

(11) **EP 0 810 147 B1**
(45) Veröffentlichungstag und Bekanntmachung des Hinweises auf die Patenterteilung: **28.11.2001**
(21) Anmeldenummer: 97106248.4
(22) Anmeldetag: 16.04.1997
(51) Int. Cl.: B62D 31/00, B62D 25/20, B60K 20/04

(54) **Bodenstruktur für einen Personenkraftwagen**
Floor structure for a passenger vehicle
Structure de plancher d'un véhicule automobile

(30) Priorität: 31.05.1996 DE 19621949
(43) Veröffentlichungstag der Anmeldung: 03.12.1997
(73) Patentinhaber: DaimlerChrysler AG, 70567 Stuttgart (DE)
(72) Erfinder: Gramer, Engelbert, 72184 Eutingen (DE)

(56) Entgegenhaltungen:
- DE-A- 3 809 185
- DE-A- 4 335 501
- DE-C- 19 506 936
- GB-A- 349 894
- GB-A- 715 108
- GB-A- 921 179
- US-A- 3 919 926

## Beschreibung

Die Erfindung betrifft eine Bodenstruktur für einen Personenkraftwagen, die sich wenigstens über die gesamte Grundfläche einer Fahrgastzelle erstreckt und die mehrere Funktionsbereiche aufweist.

Eine Bodenkonstruktion für ein Kraftfahrzeug ist aus der DE 38 09 185 C2 bekannt. Die bekannte Bodenkonstruktion ist sandwichartig aufgebaut, wobei zwischen einem oberen Bodenteil und einem unteren Bodenteil ein Wabenkern vorgesehen ist. Der obere Bodenteil weist im Bereich der Fahrgastzelle einen Mitteltunnel auf, an dessen Unterseite mittels einer mehrteiligen Blechkonstruktion Schlauchleitungen und Lagerungen für Übertragungsgestänge befestigt sind.

Aufgabe der Erfindung ist es, eine Bodenstruktur der eingangs genannten Art zu schaffen, die ohne einen Mitteltunnel eine ausreichende Steifigkeit und ausreichende Aufnahmemöglichkeiten für Fahrzeugfunktionsteile im Bereich der Fahrzeugmitte aufweist.

Diese Aufgabe wird dadurch gelöst, daß in einem mittleren Funktionsbereich ein einstückiges plattenförmiges Mittelteil in die Bodenstruktur verstärkend eingebunden ist, an dem Aufnahmen für mehrere Fahrzeugfunktionsteile einstückig angeordnet sind. Das Mittelteil stellt somit ein Multifunktionsteil dar, da Aufnahmemöglichkeiten für mehrere Fahrzeugfunktionsteile vorgesehen sind. Durch die separate Gestaltung und Einbindung des Mittelteils in die Bodenstruktur weist diese auch ohne das Vorsehen eines Mitteltunnels über ihre gesamte Fläche eine ausreichende Steifigkeit auf, die insbesondere eine sichere und komfortable Funktion von Fahrzeugfunktionsteilen wie Handbremse und Gangschaltung ermöglicht. Die jeweils separate Montage der verschiedenen Aufnahmemöglichkeiten entfällt durch die einstückige Anordnung am Mittelteil, so daß eine wesentlich schnellere und einfachere Montage der entsprechenden Fahrzeugfunktionsteile in dem mittleren Funktionsbereich ermöglicht wird. Das erfindungsgemäße Bodenelement verstärkt den Mittelbereich der Bodenstruktur und damit des Hauptbodens und nimmt Schwingungs-, Biegungs- und Torsionskräfte auf. Gleichzeitig werden Kräfte, die durch das Betätigen der Fahrzeugfunktionsteile in dem mittleren Funktionsbereich auftreten, aufgenommen, ohne daß der Hauptboden, d.h. die Bodenstruktur, durch diese Kräfte belastet wird.

In Ausgestaltung der Erfindung sind an dem Mittelteil eine Konsole für einen Handhebel einer Handbremse, eine Halterung für ein Schaltgehäuse sowie eine Aufnahme für einen Sensor einer Airbageinheit vorgesehen. Besonders vorteilhaft bei der erfindungsgemäßen Lösung ist es, daß die verschiedenen Fahrzeugfunktionsteile bereits vorab an dem Mittelteil montierbar sind und anschließend das Mittelteil in die Bodenstruktur eingebunden wird. Durch die Anordnung des Handhebels der Handbremse, des Schaltgehäuses sowie des Sensors für die Airbageinheit sind alle wesentlichen Funktionsteile des mittleren Funktionsbereiches in dem Mittelteil integriert.

In weiterer Ausgestaltung der Erfindung sind als Aufnahmen für das Schaltgehäuse wenigstens drei zueinander beabstandete Befestigungstöpfe vorgesehen, auf denen das Schaltgehäuse befestigbar ist und die von der Bodenplatte so weit nach oben abragen, daß zwischen den Befestigungstöpfen und unterhalb des Schaltgehäuses wenigstens ein Kabelkanal verlegbar ist. Vor der Montage des Schaltbockes oder Schaltgehäuses ist somit zwischen den Befestigungstöpfen ein freier Bauraum für das Einsetzen des Kabelkanales vorhanden, der frei zugänglich ist. Dadurch ist es möglich, den Kabelkanal montagefreundlich von oben einzulegen.

Durch die Anordnung der Befestigungstöpfe wird der Kabelkanal bereits exakt ausgerichtet und positioniert.

In weiterer Ausgestaltung der Erfindung ist das Mittelteil mit Versteifungen versehen, die in ihrer Positionierung und Dimensionierung auf die Versteifungsstruktur der gesamten Bodenstruktur abgestimmt sind. Das Mittelteil verstärkt somit zum einen den Mittelbereich des Hauptbodens und trägt zum anderen zur Versteifung der gesamten Bodenstruktur bei.

Weitere Vorteile und Merkmale der Erfindung ergeben sich aus den Unteransprüchen sowie aus der nachfolgenden Beschreibung eines bevorzugten Ausführungsbeispiels der Erfindung, das anhand der Zeichnungen dargestellt ist.
- Fig. 1: zeigt perspektivisch einen Teil einer Ausführungsform einer erfindungsgemäßen Bodenstruktur, die mit einem verstärkenden Mittelelement versehen ist,
- Fig. 2: in vergrößerter perspektivischer Darstellung das Mittelelement nach Fig. 1, und
- Fig. 3: einen Schnitt durch das Mittelelement auf Höhe von zwei Befestigungstöpfen längs der Schnittebene III-III in Fig. 2.

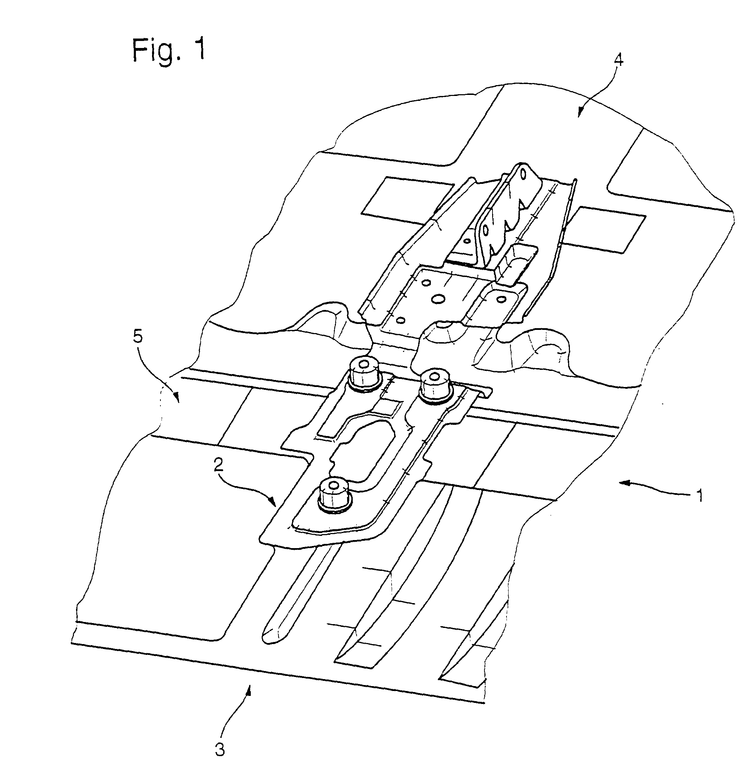

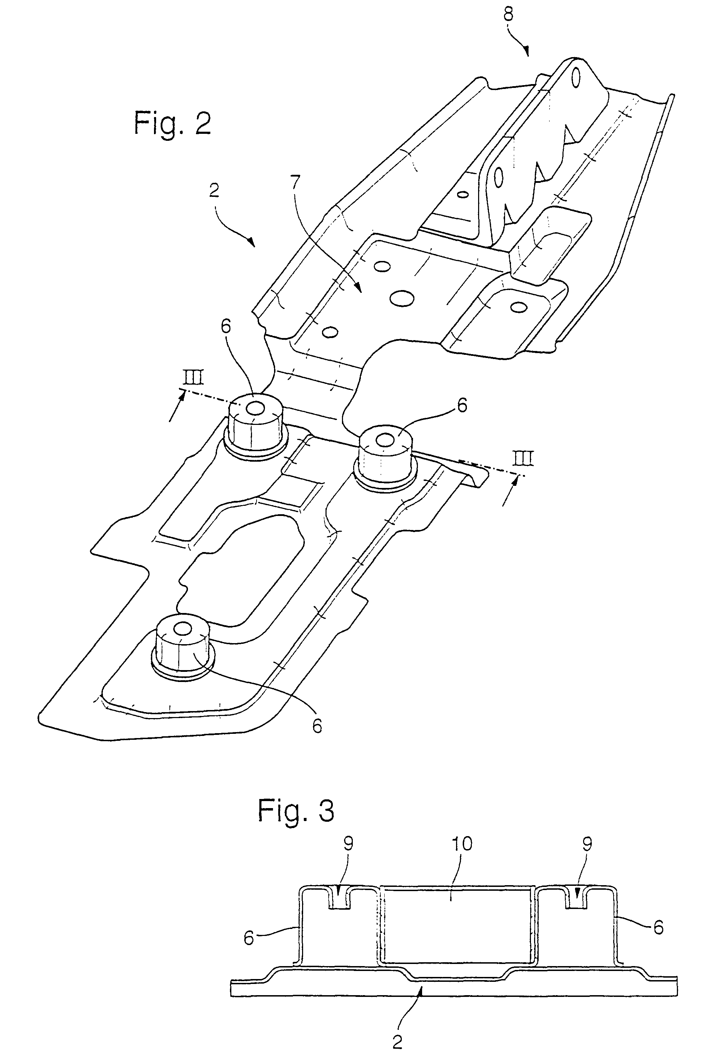

Ein Personenkraftwagen weist gemäß Fig. 1 eine Bodenstruktur auf, die durch einen plattenförmigen Hauptboden (1) einerseits und durch ein verstärkendes Mittelteil (2) (Fig. 2 und 3) andererseits gebildet wird. Ein vorderer Bereich des Hauptbodens (1) ist mit dem Bezugszeichen (3), ein hinterer Bereich mit dem Bezugszeichen (4) bezeichnet. Etwa auf Höhe des Mittelteils (2) weist der Hauptboden (1) eine querverlaufende Ausbuchtung (5) für die Aufnahme eines Querträgers auf. Das Mittelteil (2) erstreckt sich auf Höhe einer Fahrzeugmittellängsachse in Längsrichtung des Hauptbodens (1) und ist im wesentlichen plattenförmig ausgebildet (Fig. 2). In seinem Frontbereich weist das Mittelteill (2), das als Blechkonstruktion ausgebildet ist, eine Aufnahme für einen Schaltbock einer Mittelschaltung auf, bei der vom Schaltbock aus über Bowdenzüge durch eine Stirnwand des Personenkraftwagens hindurch eine Verbindung zum Schaltgetriebe geschaffen wird. Dazu sind an dem Mittelteil (2) drei Befestigungstöpfe (6) vorgesehen, die von der Bodenplatte des Mittelteils (2) nach oben abragen und zueinander beabstandet angeordnet sind. Dabei sind die beiden hinteren Befestigungstöpfe (6) auf gleicher Höhe angeordnet, der vordere Befestigungstopf (6) ist in Abstand vor den beiden hinteren Befestigungstöfpen (6) positioniert. Wie aus Fig. 3 erkennbar ist, weisen die Befestigungstöpfe (6) eine so ausreichende Höhe auf, daß unterhalb des Schaltbockes ein freier Bauraum verbleibt. Dieser freie Bauraum ist durch einen Kabelkanal (10) ausfüllbar, wobei der Kabelkanal (10) in seinen Abmessungen derart auf den Abstand der beiden Befestigungstöpfe (6) zueinander abgestimmt ist, daß die Befestigungstöpfe (6) den Kabelkanal (10) relativ zu dem Mittelteil (2) exakt ausrichten und sicher positionieren. In Abstand hinter der Aufnahme für den Schaltbock weist das Mittelteil (2) einen Aufnahmebereich (7) für einen Sensor einer Airbageinheit auf, der vorzugsweise durch Verschrauben mit dem Aufnahmebereich (7) verbindbar ist. In ihrem oberen Stirnbereich weisen die Befestigungstöpfe (6) jeweils einen Durchzug (9) auf, der mit einem Gewinde oder einer eingepreßten oder eingeschweißten Gewindemutter für die Schraubenfixierung des Schaltbockes versehen ist.

Im hinteren Bereich des Mittelteiles (2) ist eine nach oben abragende Konsole (8) zur Befestigung eines Handhebels einer Handbremse angeordnet. Die Konsole (8) sowie die Befestigungstöpfe (6) sind beim dargestellten Ausführungsbeispiel zunächst als getrennte Blechteile hergestellt und anschließend mit dem Mittelteil (2) verschweißt. Der Aufnahmebereich (7) ist direkt an dem Mittelteil (2) durch Tiefziehen oder ähnliches angeformt.

Zusätzlich weist das Mittelteil (2) mehrere, nicht näher bezeichnete Versteifungsabschnitte auf, die dem Mittelteil (2) eine hohe Eigensteifigkeit gewährleisten. Das Mittelteil (2) ist in den Hauptboden (1) integriert, indem es im Bereich seiner Außenränder mit dem Hauptboden (1) verschweißt ist.

## Patentansprüche

1. Bodenstruktur für einen Personenkraftwagen, die sich wenigstens über die gesamte Grundfläche einer Fahrgastzelle erstreckt und die mehrere Funktionsbereiche aufweist,
**dadurch gekennzeichnet,**
**daß** in einem mittleren Funktionsbereich ein einstückiges plattenförmiges Mittelteil (2) in die Bodenstruktur (1) verstärkend eingebunden ist, an dem Aufnahmen (6, 7, 8) für mehrere Fahrzeugfunktionsteile einstückig angeordnet sind, wobei an dem Mittelteil (2) eine Konsole (8) für einen Handhebel einer Handbremse, eine Halterung (6) für ein Schaltgehäuse sowie eine Aufnahme (7) für einen Sensor einer Airbageinheit vorgesehen sind, und wobei als Aufnahme für das Schaltgehäuse wenigstens drei zueinander beabstandete Befestigungstöpfe (6) vorgesehen sind, auf denen das Schaltgehäuse befestigbar ist und die von einer Bodenplatte des Mittelteiles aus so weit nach oben abragen, daß zwischen den Befestigungstöpfen (6) und unterhalb des Schaltgehäuses wenigstens ein Kabelkanal (10) verlegbar ist.

2. Bodenstruktur nach Anspruch 1,
**dadurch gekennzeichnet,**
**daß** das Mittelteil (2) mit Versteifungen versehen ist, die in ihrer Positionierung und Dimensionierung auf die Versteifungsstruktur der gesamten Bodenstruktur abgestimmt sind.

## Claims

1. Base structure for a motor car, which extends at least over the entire floor space of a passenger cell, and which has several functional areas,
**characterised in that**
in a central functional area a one-component plate-form central component (2) is fixed into the base structure (1) in a reinforcing way, wherein on the central component (2) mounts (6, 7, 8) for several vehicle functional components are arranged in a one-component way, wherein on the central component (2) a console (8) for a hand lever of a handbrake, a mount (6) for a gearbox and a mount (7) for a sensor of an airbag unit are provided, and wherein as a mount for the gearbox at least three fixing tops (6) which are spaced apart are provided, on which the gearbox can be secured, and which project so far up away from a base plate of the central component that between the fixing tops (6) and below the gearbox at least one cable channel (10) can be laid.

2. Base structure according to Claim 1
**characterised in that**
the central component (2) is provided with reinforced areas, which are oriented in their positioning and dimensions to the reinforcement structure of the entire base structure.

## Revendications

1. Structure de plancher pour une voiture de tourisme qui s'étend au moins sur toute la surface de base d'un habitacle du véhicule et présente plusieurs zones fonctionnelles,
**caractérisée par le fait que** dans une zone fonctionnelle médiane est intégrée dans la structure de plancher (1), la renforçant, une pièce médiane (2) monobloc, en forme de plateau, sur laquelle sont disposés, en monobloc, des réceptacles (6, 7, 8) pour plusieurs pièces fonctionnelles du véhicule, dans laquelle, sur la pièce médiane (2) sont prévus une console (8) pour un levier de frein à main, un support (6) pour un boîtier de levier de vitesse ainsi qu'un réceptacle (7) pour un détecteur d'un coussin gonflable, et dans laquelle, comme réceptacles pour le boîtier de levier de vitesse, sont prévus au moins trois pots de fixation (6) qui sont disposés à distance l'un de l'autre, sur lesquels le boîtier du levier de vitesse peut se fixer et qui, depuis un panneau de plancher de la pièce médiane, saillent suffisamment vers le haut pour qu'entré les pots de fixation (10) et sous le boîtier de levier de vitesse puisse passer au moins un canal de câbles (10).

2. Structure de plancher selon la revendication 1, **caractérisé par le fait**
**que** la pièce médiane (2) présente des renforts dont la position et les dimensions sont adaptées à la structure de renfort de l'ensemble de la structure de plancher.
